# EUROPEAN PATENT SPECIFICATION

(11) **EP 3 758 909 B1**
(45) Date of publication and mention of the grant of the patent: **02.03.2022**
(21) Application number: 19710501.8
(22) Date of filing: 28.02.2019
(51) Int. Cl.: B29C 45/76, B29C 45/27, G01M 3/26, B29C 45/84

(54) **METHOD AND APPARATUS FOR DETECTING A LEAK OF MOLTEN PLASTICS MATERIAL**
VERFAHREN UND VORRICHTUNG ZUM ERKENNEN EINER LECKAGE VON GESCHMOLZENEM KUNSTSTOFFMATERIAL
PROCÉDÉ ET APPAREIL DE DÉTECTION D'UNE FUITE DE MATIÈRE PLASTIQUE FONDUE

(30) Priority: 28.02.2018 IE S20180043
(43) Date of publication of application: 06.01.2021
(73) Proprietor: Kennedy, Gerard, Patrick, Dublin 13 (IE)
(72) Inventor: Kennedy, Gerard, Patrick, Dublin 13 (IE)
(74) Representative: Gorman, Francis Fergus
(86) International application number: PCT/IE2019/000002
(87) International publication number: WO 2019/167033

(56) References cited:
- DE-A1-102012 109 575
- US-A- 5 542 835

## Description

The present invention relates to a method and apparatus for detecting a leak of molten plastic material, for example, a method and apparatus for detecting a leak of molten plastics material in a plastics material forming mould, from an injection system whereby plastics material is heated to a molten state and injected from the injection system through an injection nozzle into a mould, and/or from any other system where molten plastics material is maintained under pressure and from which the molten plastics material could leak.

Machines, for example, moulding machines, moulds, dyes, injection nozzles, extrusion nozzles and extrusion systems where plastics material is heated to a molten state and pressurised for forming into various components, elements and the like are well known. For example, such moulds may be of the type commonly referred to as injection moulds, while others may be of the type which are commonly referred to as extrusion moulds or dies. In all such moulds, and in particular, in injection moulds, and more particularly, in hot runner injection moulds, it is not unusual for leaks to develop from various components within a mould, from which molten plastics material may leak from or into the mould. For example, molten plastics material may leak from a component or from a joint between the component and a contact surface of the mould, and in turn into a gallery or channel within the mould. This is a particularly common problem in hot runner injection moulds, where leaks may develop between an injection nozzle and a gate to a cavity of the mould. Since the molten plastics material in such injection moulds is at a relatively high pressure, the high pressure molten plastics material leaking into a channel or gallery can cause significant damage. For example, if the channel or gallery accommodates components such as connectors of electrically powered heater elements, thermocouples and the like, or indeed wires to such heater elements, thermocouples and the like, the pressurised molten plastics material may result in the destruction or encapsulation of such thermocouples and heater elements and other components, and may result in wires being disconnected from the heater elements and thermos couples. Another problem associated with such leaks, particularly in injection moulds comprising a hot runner system, is that they occur in parts of the mould, which in use are not visible, and considerable damage may be done to the mould and/or the hot runner system before the leak is detected. A further and not insignificant problem associated with such leaks is that, in general, the leaks occur in parts of the mould which are not easily accessible, and the removal of leaked plastics material after it has solidified in the galleries or channels of the mould can be a considerably onerous task. Accordingly, early detection of such leaks is essential in order to minimise damage to such moulds and associated components.

Additionally, molten plastics material is delivered from an injection system of a moulding machine into an injection mould through an injection nozzle. The molten plastics material being delivered through the injection nozzle into the mould is highly pressurised, and it is not uncommon for leaks to occur at the injection nozzle and between the injection nozzle and a sprue bush interface. Leaks may also occur in an injection or an extrusion system where sections of the injection or extrusion system are coupled together or other areas such as a melt pump in an extrusion system. Such leaks are also difficult to detect, since in general the areas where the leaks occur may be hidden from view or are enclosed.

U.S. Patent Specification No. 5,542,835 discloses a method for detecting a leak of molten plastics material for detecting a leak adjacent and between the main injection nozzle and a sprue bush through which molten plastics material is delivered under pressure into a mould. A small bore copper conduit the distal end of which is located adjacent a potential leak site is supplied with a low pressure regulated air supply. The pressure or flow of the air through the pipe is monitored in order to detect a blockage or restriction to the air adjacent the distal end of the conduit, which would result from the presence of molten plastics material. U.S. Patent Specification No. 5,542,835 also discloses how the leak detector may be installed in a typical multi-gate hot runner system. A problem with this detecting method is that the molten plastics material may present to the distal end of the conduit with a relatively hard surface edge, which would be particularly so in a case where the leaking molten plastics material has been in contact with air or a surface, the temperature of which, less than the melting point temperature of the plastics material. Such a relatively hard surface could result in the distal end of the conduit being engaged by the plastics material, but the hard surface would not necessarily result in blocking the distal end of the conduit, nor would it result in a restriction to the air flow through the distal end of the conduit sufficient to be detectable. A further problem with this method is that the molten plastics material may not always present in a direction towards the distal end of the conduit, but may approach from behind or to one side of the distal end of the conduit, thus likewise failing to block the distal end of the conduit or bending the conduit away in front of the advancing leaking molten plastics material.

German Patent Specification No. DE 10 2012 109 575 A1 of Sudermann et al. discloses a leakage detection device for detecting leakage of plastics material in an injection moulding tool. Air is drawn through a tubular suction line from a gallery in the moulding tool into which molten plastics may leak. The air drawn through the suction tube is analysed in a gas sensor to determine if gas associated with leaking molten plastics material is detected in the air. An exhaust line from the sensor returns air drawn from the gallery in the mould to the gallery.

There is therefore a need for a method and apparatus which addresses the problem of such known methods and apparatus for detecting a leak of molten plastics material.

The present invention is directed towards providing such a method and apparatus.

According to the invention there is provided a method for detecting a leak of molten plastics material, the method comprising placing a tubular detecting element adjacent a site from which molten plastics material may leak, and urging a fluid through the tubular detecting element, wherein the tubular detecting element is of deformable transverse cross-section, and the method further comprises monitoring one of the pressure and flow of the fluid through the tubular detecting element at a location one of upstream and downstream of the tubular detecting element, and determining the presence of a leak of molten plastics material adjacent the tubular detecting element in response to the one of the monitored pressure and the monitored flow of the fluid through the tubular detecting element.

Preferably, the tubular detecting element is located adjacent a component with a potential to leak.

In one aspect of the invention the tubular detecting element comprises a relatively small bore tubular detecting element. Preferably, the bore of the tubular detecting element is of circular transverse cross-section.

In one embodiment of the invention the diameter of the bore of the tubular detecting element lies in the range of 0.1 mm to 10mm. Preferably, the diameter of the bore of the tubular detecting element lies in the range of 0.5mm to 3mm. Advantageously, the diameter of the bore of the tubular detecting element is approximately 1.7mm.

In another embodiment of the invention the tubular detecting element comprises a heat resistant material. Preferably, the tubular detecting element comprises a heat resistant material resistant to temperatures not less than the temperature of the molten plastics material. Advantageously, the material of the tubular detecting element comprises a silicone material. Ideally, the material of the tubular detecting element comprises a heat stabilised silicone rubber material.

In one embodiment of the invention the flow of the fluid through the tubular detecting element is flow controlled.

In another embodiment of the invention the fluid is applied to the tubular detecting element at a regulated pressure.

In another embodiment of the invention the presence of leaking molten plastics material is determined in response to a fall in the flow rate of the fluid being urged through the tubular detecting element. In another embodiment of the invention the flow of fluid through the tubular detecting element is controlled by a flow control means, and the flow rate of the fluid through the tubular detecting element is determined by the differential pressure across the flow control means.

In another embodiment of the invention the fluid is urged through the tubular detecting element by supplying the fluid at a positive pressure. Preferably, the fluid is supplied to the tubular detecting element at a positive pressure and the presence of a leak of the molten plastics material is determined in response to one of a rise in the monitored pressure of the fluid being urged through the tubular detecting element when the pressure of the fluid is monitored upstream of the tubular detecting element, and a fall in the monitored pressure when the pressure of the fluid is monitored downstream of the tubular detecting element.

In one embodiment of the invention the fluid is supplied to the tubular detecting element at a pressure in the range of 0.01 bar to 10 bar. Preferably, the fluid is supplied to the tubular detecting element at a pressure in the range of 0.02 bar to 0.5 bar. Advantageously, the fluid is supplied to the tubular detecting element at a pressure of approximately 0.1 bar.

Alternatively, the fluid is urged through the tubular detecting element by applying a negative pressure to the tubular detecting element.

In another embodiment of the invention the fluid comprises air.

In another embodiment of the invention the fluid is continuously urged through the tubular detecting element.

In an alternative embodiment of the invention the fluid is intermittently urged through the tubular detecting element. Preferably, the fluid is urged through the tubular detecting element for a predefined time period at intervals of predefined time duration.

In one embodiment of the invention the predefined time period lies in the range of 1 second to 10 seconds. Preferably, the predefined time period lies in the range of 2 seconds to 5 seconds. Advantageously, the predefined time period is approximately 2.5 seconds.

In another embodiment of the invention the predefined time duration of each interval lies in the range of 5 seconds to 60 seconds. Preferably, the predefined time duration of each interval lies in the range of 10 seconds to 30 seconds. Advantageously, the predefined time duration of each interval is approximately 15 seconds.

In one embodiment of the invention the fluid is delivered to the tubular detecting element through a connecting conduit. Preferably, the connecting conduit comprises a non-deformable material. Advantageously, the connecting conduit comprises a connecting conduit of non-deformable transverse cross-section. Ideally, the connecting conduit comprises a rigid connecting conduit.

In another embodiment of the invention a plurality of tubular detecting elements are placed at a plurality of respective sites from which molten plastics material may leak. Preferably, the fluid is urged through the tubular detecting elements in series. Advantageously, the tubular detecting elements are connected in series.

In one embodiment of the invention the tubular detecting elements are connected by a plurality of respective ones of the connecting conduits. Preferably, the tubular detecting elements are connected in series by the connecting conduit.

In one embodiment of the invention the method is configured for detecting a leak of molten plastics material in a plastics material forming mould one of outside and within the plastics material forming mould.

In another embodiment of the invention the tubular detecting element is located one of outside and within the mould.

In a further embodiment of the invention the tubular detecting element is located adjacent an injection nozzle through which molten plastics material is delivered to a corresponding moulding cavity in the mould. Preferably, the tubular detecting element is located in one of a gallery and a channel in the mould adjacent a site from which the molten plastics material may leak.

The invention also provides apparatus for carrying out the method according to the invention for detecting a leak of molten plastics material.

Additionally, the invention provides apparatus for detecting a leak of molten plastics material, the apparatus comprising a tubular detecting element configured for placing adjacent a site from which molten plastics material may leak, and an urging means for urging a fluid through the tubular detecting element, wherein the tubular detecting element is of a deformable transverse cross-section, and the apparatus further comprises a monitoring means for monitoring one of the pressure and flow of the fluid through the tubular detecting element at one of an upstream location and a downstream location relative to the tubular detecting element, and a means for determining the presence of a leak of molten plastics material adjacent the tubular detecting element in response to the one of the monitored pressure and the monitored flow of the fluid monitored by the monitoring means.

Preferably, the tubular detecting element comprises a small bore tubular element. Advantageously, the bore of the tubular detecting element is of circular transverse cross-section.

In one embodiment of the invention the monitoring means is located upstream of the tubular detecting element.

In another embodiment of the invention the monitoring means is configured to monitor pressure upstream of the tubular detecting element.

In a further embodiment of the invention the monitoring means is located downstream of the tubular detecting element.

In another embodiment of the invention the monitoring means is configured to monitor pressure downstream of the tubular detecting element.

In another embodiment of the invention the monitoring means is located upstream and downstream of the tubular detecting element.

In another embodiment of the invention the monitoring means is configured to monitor a pressure drop across the tubular detecting element.

In one embodiment of the invention a flow control means is provided, and the monitoring means is configured to monitor the differential pressure across the flow control means.

In one embodiment of the invention the urging means is configured to supply the fluid to the tubular detecting element at a regulated pressure.

In another embodiment of the invention the urging means is configured to supply the fluid to the tubular detecting element at a regulated flow rate.

Preferably, the urging means comprises a fluid source for supplying and urging the fluid through the tubular detecting element. Advantageously, the fluid is supplied to the tubular detecting element at a positive pressure.

In one embodiment of the invention the fluid is supplied to the tubular detecting element at a pressure in the range of 0.01 bar to 10 bar. Preferably, the fluid is supplied to the tubular detecting element at a pressure in the range of 0.02 bar to 0.5 bar. Advantageously, the fluid is supplied to the tubular detecting element at a pressure of approximately 0.1 bar.

In an alternative embodiment of the invention the urging means comprises a vacuum for drawing air through the tubular detecting element.

In one embodiment of the invention a plurality of the tubular detecting elements are provided. Preferably, the tubular detecting elements are connected in series. Advantageously, the tubular detecting elements are located spaced apart from each other.

In one embodiment of the invention the tubular detecting elements are connected to each other by respective ones of the connecting conduit.

In another embodiment of the invention the apparatus is adapted for detecting a leak of molten plastics material in a plastics material forming mould.

Preferably, the tubular detecting element is adapted for locating in the mould. Advantageously, the tubular detecting element is adapted for locating adjacent the injection nozzle through which molten plastics material is delivered to the mould. Preferably, the tubular detecting element is adapted for locating in one of a gallery and a channel in the mould adjacent a site from which molten plastics material may leak.

The invention also provides a plastics material forming mould comprising apparatus according to the invention for detecting a leak of molten plastics material in the plastics material forming mould.

Preferably, the plastics material forming mould comprises an injection mould.

The invention also provides a moulding machine comprising a plastics material forming mould, and apparatus according to the invention for detecting a leak of molten plastics material in the mould.

The advantages of the invention are many. A particularly important advantage of the invention is that the apparatus according to the invention provides a particularly sensitive apparatus for detecting a leak of molten plastics material in a mould. By virtue of the fact that the tubular detecting elements are of a deformable material, and in particular, are of a deformable transverse cross-section, once the molten plastics material, which is relatively viscous, beings to urge against one of the tubular detecting elements, the movements of which, in general, are relatively restricted, particularly when located in a gallery of the mould, the flow characteristic of air or indeed any other fluid through the tubular detecting element is immediately altered, and the change in the flow characteristic of the air or other fluid through the bore of the tubular detecting element is readily detectable by either monitoring pressure or fluid flow through the tubular detecting element. Additionally, even if the leaking molten plastics material tends to urge the corresponding tubular detecting element from its normal location in the gallery in the mould, in general, any movement of the tubular detecting element results in deformation of the tubular detecting element, and in particular, deformation of the transverse cross-sectional area of the tubular detecting element, which can be readily detected by monitoring the pressure or flow of fluid through the tubular detecting element of the apparatus.

The invention will be more clearly understood from the following description of some preferred non-limiting embodiments thereof which are given by way of example only with reference to the accompanying drawings, in which:
Fig. 1 is a cross-sectional elevational view of a plastics material forming mould comprising apparatus also according to the invention for detecting a leak of molten plastics material in the mould,
Fig. 2 is a view similar to Fig. 1 of the mould of Fig. 1 illustrated without the apparatus for detecting a leak of molten plastics material in the mould,
Fig. 3 is a circuit diagram of the apparatus of Fig. 1 for detecting a leak of molten plastics material in the mould of Fig. 1,
Fig. 4 is a perspective view of a detail of the apparatus of Fig. 1,
Fig. 5 is a cross-sectional side elevational view of a portion of the apparatus of Fig. 1, and
Fig. 6 is a circuit diagram of apparatus according to another embodiment of the invention for detecting a leak of molten plastics material in a plastics material forming mould.

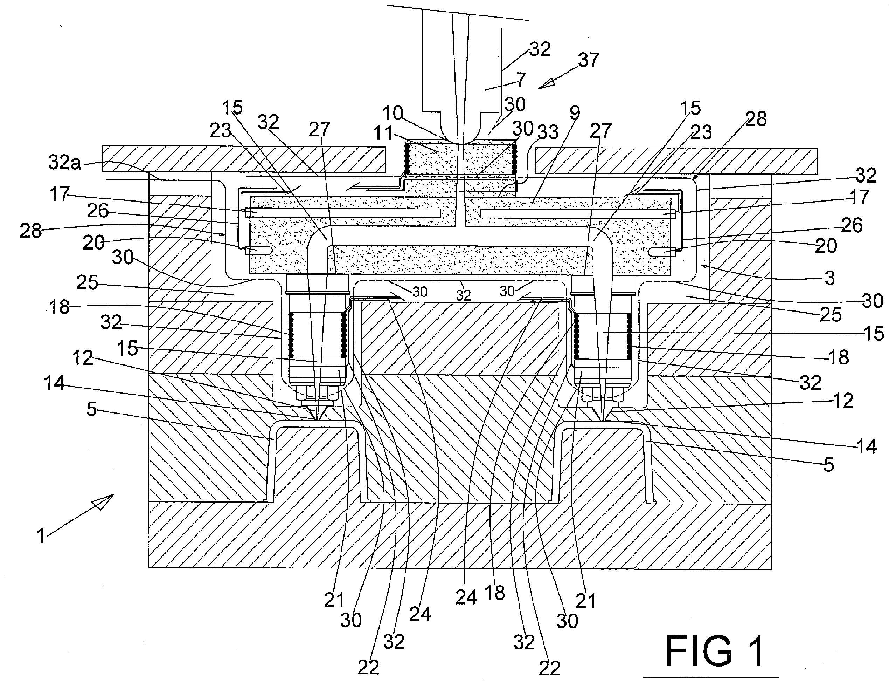

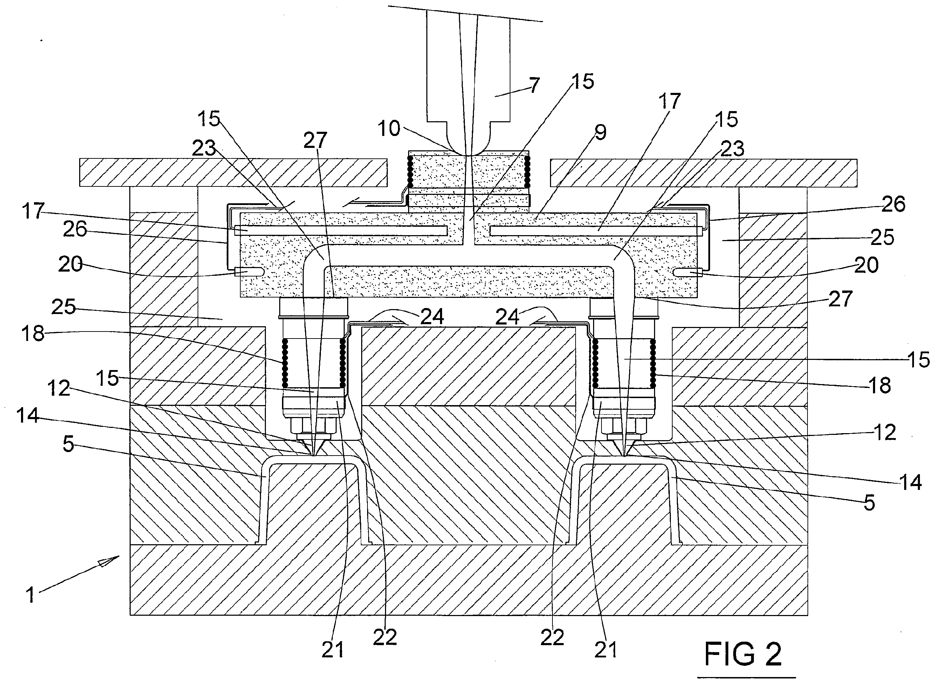

Referring to the drawings, and initially to Figs. 1 to 5, there is illustrated a plastics material forming mould according to the invention, which in this embodiment of the invention comprises an injection mould indicated generally by the reference numeral 1 for injection moulding components (not shown) of plastics material. The mould 1 comprises apparatus also according to the invention indicated generally by the reference numeral 3 for carrying out a method according to the invention for detecting a leak of molten plastics material, in this embodiment of the invention for detecting a leak of molten plastics material within the mould 1, and also from a main injection nozzle 7 through which molten plastics material is supplied to the mould 1 as will be described below.

Before describing the apparatus 3, the mould 1 will first be described.

The mould 1 in this embodiment of the inventions comprises a hot runner mould, and for simplicity, is described as being a two nozzle hot runner mould. The mould 1 comprises two moulding cavities 5, in which the respective components (not shown) of plastics material are formed. The mould 1 is supplied with molten plastics material under relatively high pressure through the main injection nozzle 7 from a moulding machine (not shown), within which the mould 1 is located. Such moulding machines will be well known to those skilled in the art. The main injection nozzle 7 engages a sprue bush 10 of a cylindrical heater 11, through which molten plastics material is delivered from the main injection nozzle 7 into a hot runner manifold 9 of the mould 1. A pair of secondary injection nozzles 12 within the mould 1 supplies the molten plastics material under pressure into the respective cavities 5 through gates 14. Channels 15 through the cylindrical heater 11 and the hot runner manifold 9 accommodate the molten plastics material from the main injection nozzle 7 to the secondary injection nozzles 12.

Electrically powered heating elements 17 are located in the hot runner manifold 9 for maintaining the plastics material in the channels 15 of the hot runner manifold 9 in the molten state. Electrically powered heating elements 18 around the respective secondary injection nozzles 12 maintain the plastics material in the molten state in the secondary injection nozzles 12. Thermocouples 20 in the hot runner manifold 9 and thermocouples 21 in the secondary injection nozzles 12 monitor the temperature of the hot runner manifold 9 and the secondary injection nozzles 12, respectively, for controlling the operation of the heating elements 17 and 18, respectively, for in turn maintaining the temperature of the hot runner manifold 9 and the secondary injection nozzles 12 at a suitable desired temperature in order to maintain the plastics material therein in the molten state.

Electrically insulated, electrically conductive wires 23 and 24 are connected to the heating elements 17 and 18, respectively, and extend through galleries 25 in the mould 1 around the hot runner manifold 9 for supplying electrical power to the heating elements 17 and 18, respectively, from a suitable controller (not shown) located in the moulding machine. Electrically insulated, electrically conductive wires 26 extend from the thermocouples 20 for facilitating monitoring of the temperature of the hot runner manifold 9 by the controller (not shown) located in the moulding machine. Electrically insulated, electrically conductive wires 22 extend from the thermocouples 21 for facilitating monitoring of the temperature of the secondary injection nozzles 12 by the controller (not shown). The controller controls the power supply to the heating elements 17 and 18 in response to the temperature values read from the thermocouples 20 and 21. Such controllers will be well known to those skilled in the art.

In injection moulds of the type of the mould 1 just described, leaks of molten plastics material may occur within the injection mould in many locations, and in particular, in locations where one component of the mould 1 is joined to another component thereof. Typical locations where leaks of molten plastics material may occur in the mould 1 are at the joint between the secondary injection nozzles 12 and the gates 14. Leaks of molten plastics material may also occur between the joints 27 where the secondary injection nozzles 12 are secured to the hot runner manifold 9. Additionally, leaks of molten plastics material may also occur adjacent a joint 33 between the cylindrical heater 11 and the hot runner manifold 9. These leaks of the molten plastics material result in molten plastics material leaking into the galleries 25 adjacent the joints. Leaks of molten plastics material may also occur between the main injection nozzle 7 and the sprue bush 10, and such leaks result in the main injection nozzle 7 and its associated components being covered with the molten plastics material, which subsequently solidifies thereon.

Accordingly, in this embodiment of the invention the apparatus 3 for detecting a leak of molten plastics material in the mould 1 is configured for detecting leaks at the joints between the secondary injection nozzles 12 and the gates 14, at the joints 27 between the secondary injection nozzles 12 and the hot runner manifold 9, at the joint 33 between the cylindrical heater 11 and the hot runner manifold 9, and at the joint between the main injection nozzle 7 and the sprue bush 10 of the cylindrical heater 11. In this embodiment of the invention the apparatus 3 comprises a detecting means, namely, a first detecting circuit 28 located in the galleries 25 for detecting leaks of molten plastics material into the galleries 25 from the respective joints within the mould 1. The first detecting circuit 28 comprises a plurality of elongated tubular detecting elements 30, in this case, seven tubular detecting elements 30 for detecting leaks of molten plastics material from the respective joints within the mould 1, as will be described below. A second detecting circuit 37 comprising a single tubular detecting element 30 is provided for detecting a leak between the main injection nozzle 7 and the sprue bush 10.

The tubular detecting elements 30 of the first detecting circuit 28 are interconnected in series by connecting conduits 32, with the tubular detecting elements 30 located in the galleries 25 adjacent corresponding ones of the joints between the secondary injection nozzles 12 and the gates 14, the joints 27 between the secondary injection nozzles 12 and the hot runner manifold 9, and the joint 33 between the cylindrical heater 11 and the hot runner manifold 9, respectively, for detecting leaks at these locations into the galleries 25. A proximal one of the connecting conduits 32, namely, the connecting conduit 32a connects an upstream end of the first detecting circuit 28 to a control and monitoring circuit 38, which is housed in a control housing 39, for monitoring the first detecting circuit 28. The tubular detecting element 30 of the second detecting circuit 37 is connected to the control and monitoring circuit 38 by a connecting conduit 32 for monitoring the second detecting circuit 37. In Fig. 1 for convenience the tubular detecting elements 30 are illustrated by broken lines, and the connecting conduits 32 are illustrated by full lines.

In this embodiment of the invention each tubular detecting element 30 comprises an elongated tubular detecting element 30 having a bore 31 extending longitudinally therethrough from one end 34 to the other end 35. Each tubular detecting element 30 is of a heat stabilised silicone rubber material which in this embodiment of the invention is resiliently deformable, and in particular is of deformable transverse cross-section. Thus, should a leak of the molten plastics material occur from any of the joints into the adjacent gallery 25, or from the joint between the main injection nozzle 7 and the sprue bush 10, the pressure of the molten plastics material bearing on the corresponding one of the tubular detecting elements 30 results in the transverse cross-section of that tubular detecting element 30 being deformed, thereby either blocking the bore 31 through the tubular detecting element 30 or significantly restricting the transverse cross-sectional area of the bore 31 of the tubular detecting element 30, and in turn presenting a resistance to flow of a fluid through the tubular detecting element 30. A fluid, in this embodiment of the invention air is urged through the first and second detecting circuits 28 and 37 under the control of the control and monitoring circuit 38. The control and monitoring circuit 38 monitors either or both of the pressure and flow rate of the air being urged through the first and second detecting circuits 28 and 37, as will be described below, for detecting the presence of a leak of molten plastics material into the galleries 25 of the mould 1 or from the joint between the main injection nozzle 7 and the sprue bush 10.

Each tubular detecting element 30 is of circular external transverse cross-section of approximately 2.3mm outer diameter. The bore 31 extending through each tubular detecting element 30 is of circular transverse cross-section of diameter of approximately 1.7mm. The ends 34 and 35 of the respective tubular detecting elements 30 in the first detecting circuit 28 are sealably connected to the corresponding connecting conduits 32.

The tubular detecting element 30 of the second detecting circuit 37 is connected to the corresponding connecting conduit 32 at the end 34, the other end 35 of the tubular detecting element 30 is open to atmosphere.

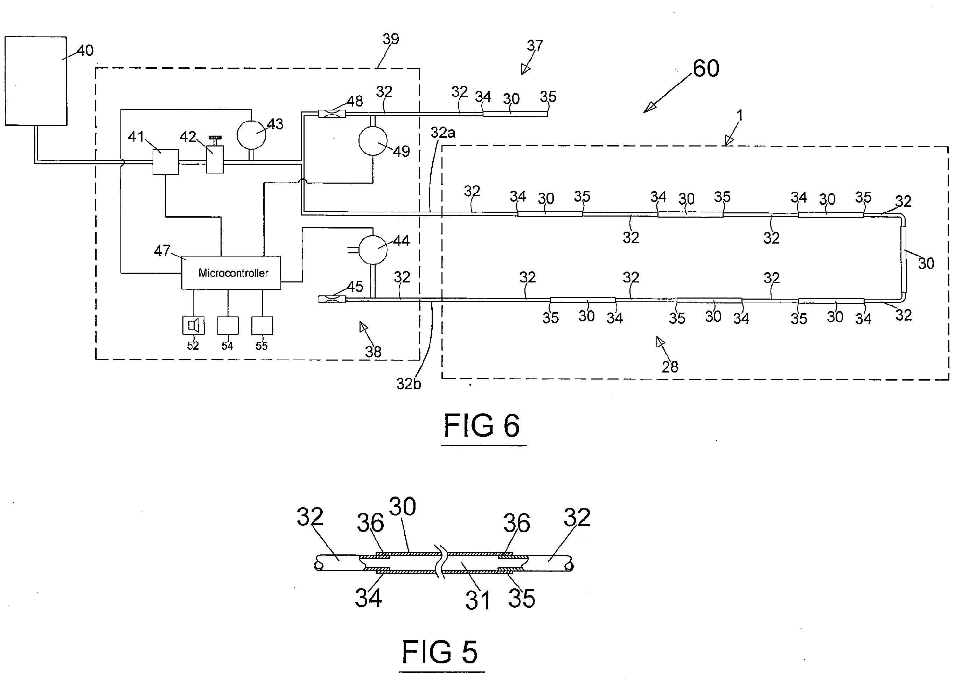

Each connecting conduit 32 is of a non-deformable, and preferably, a rigid material, which in this. embodiment of the invention comprises stainless steel material. The connecting conduits 32 are of circular transverse cross-section of internal diameter of approximately 1.4mm and external diameter of approximately 2mm. The connecting conduits are sealably connected to the corresponding tubular detecting elements 30 by inserting ends 36 of the connecting conduits 32 into the bores 31 of the adjacent tubular detecting elements 30 adjacent the corresponding one of the opposite ends 34 and 35 thereof, see Fig. 5. The connecting conduits 32 are configured so that when the first detecting circuit 28 is located in the galleries 25, the connecting conduits 32 prevent direct contact of the tubular detecting elements 30 with adjacent parts of the mould 1 in order to avoid direct heat transfer from the mould 1 to the tubular detecting elements 30 by heat conduction. Similarly, the connecting conduit 32 of the second detecting circuit 37 is configured to prevent direct contact between the tubular detecting element 30 thereof and the main injection nozzle 7 or the sprue bush 10.

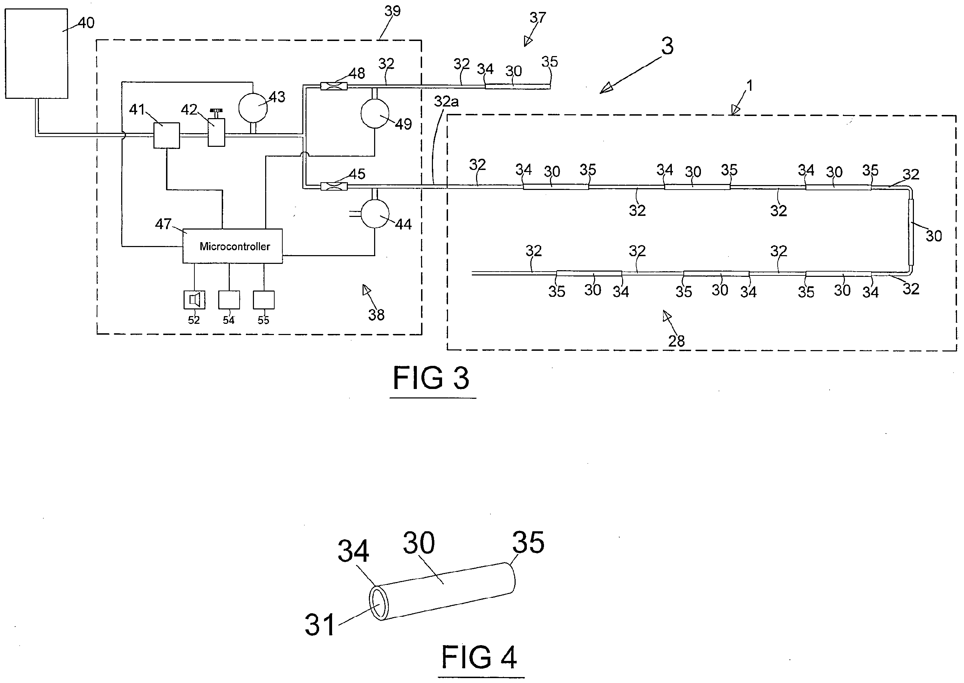

Referring now to Fig. 3, the apparatus 3 according to the invention will now be described in detail. The apparatus 3 comprises an urging means for urging air through the first and second detecting circuits 28 and 37, which in this embodiment of the invention comprises a pressurised source of air, which in this case comprises a compressed air source 40, which is located externally of the control housing 39, and supplies compressed air to a solenoid controlled isolating valve 41 located in the control housing 39 through which air is delivered to the first and second detecting circuits 28 and 37. A pressure regulator 42 regulates the pressure at which the air is delivered into the first and second detecting circuits 28 and 37 to a suitable predefined pressure, which in this embodiment of the invention is approximately 0.1 bar. A monitoring means for monitoring one of the pressure and flow of the air delivered to the first and second detecting circuits 28 and 37, in this embodiment of the invention comprises a first pressure sensor 43 located at an upstream end of the detecting circuit 28, upstream of the tubular detecting elements 30 for monitoring the pressure of the air being delivered to the first and second detecting circuits 28 and 37 at the upstream end thereof. A second pressure sensor 44 located downstream of the first pressure sensor 43 and at the upstream end of the first detecting circuit 28, monitors the circuit pressure of the air in the first detecting circuit 28. A flow control means, namely, a first flow controller 45 located between the first pressure sensor 43 and the second pressure sensor 44 controls the flow rate of the air through the first detecting circuit 28 and in turn through the tubular detecting elements 30 thereof.

The flow control means also comprises a second flow controller 48 downstream of the first pressure sensor 43 for controlling the flow rate of air through the second detecting circuit 37. A third pressure sensor 49 downstream of the second flow controller 48 and upstream of the second detecting circuit 37 monitors circuit pressure of the air in the second detecting circuit 37.

A control means, namely, a signal processor, which in this embodiment of the invention comprises a microcontroller 47 controls the operation of the control and monitoring circuit 38 and controls the operation of the solenoid operated isolating valve 41 for controlling the delivery of compressed air to the first and second detecting circuits 28 and 37. The microcontroller 47 reads signals from the first pressure sensor 43, and the second and third pressure sensors 44 and 49, respectively. The microcontroller 47 determines from the circuit pressure in the first detecting circuit 28 read from the second pressure sensor 44 the presence or absence of a leak of molten plastics material into the galleries 25 in the mould 1, and from the circuit pressure of the second detecting circuit 37 read from the third pressure sensor 49, the presence or absence of a leak of molten plastics material from the main injection nozzle 7 between the main injection nozzle 7 and the sprue bush 10.

Turning initially to the first detection circuit 28, in normal operation with the pressure regulated air being continuously supplied to the detecting circuit 28 at the predefined pressure of approximately 0.1 bar, without any leaks of molten plastics material, the first detecting circuit 28 presents a constant resistance to flow of air through the first detecting circuit 28. This in turn results in a constant circuit pressure being developed at the second pressure sensor 44. On an increase in the circuit pressure being detected by the second pressure sensor 44, which would result from one of the tubular detecting elements 30 of the first detecting circuit 28 being deformed as a result of a leak of molten plastics material, the microcontroller 47 determines the presence of a leak of molten plastics material into one or more of the galleries 25 in the mould 1. The microcontroller 47 on determining the presence of a leak activates a sounder 52 to give an audible warning of the presence of a molten plastics material leak. The microcontroller 47 also activates a first relay 54 which may be used to deactivate the injection moulding machine on which the mould 1 is mounted.

Turning now to the second detecting circuit 37, in normal operation of the second detecting circuit 37, with the pressure regulated air being continuously supplied to the second detecting circuit 37 at the predefined pressure of approximately 0.1 bar, without any leaks of molten plastics material from the main injection nozzle 7, the second detecting circuit 37 presents a constant resistance to flow of air therethrough. This in turn results in a constant circuit pressure of the air in the second detecting circuit 37 being developed at the third pressure sensor 49. On an increase in the circuit pressure being detected by the third pressure sensor 49, which would result from the tubular detecting element 30 of the second detecting circuit 37 being deformed as a result of a leak of molten plastics material from the main injection nozzle 7, the microcontroller 47 determines the presence of a leak of molten plastics material from the main injection nozzle 7. The microcontroller 47, on determining the presence of a leak from the main injection nozzle, activates the sounder 52 to give an audible warning of the presence of the leak. The microcontroller 47 also activates the first relay 54 which as discussed above may be used to deactivate the injection moulding machine on which the mould 1 is mounted.

The microcontroller 47 is also programmed to monitor for a drop in pressure or no pressure being recorded by the first pressure sensor 43, which would indicate that a fault had developed in the supply of the compressed air, and therefore the first and second detecting circuits 28 and 37 and in turn the apparatus 3 would be unable to monitor for leaks of the molten plastics material. On detecting a drop in the pressure monitored by the first pressure sensor 43 or no pressure being recorded by first pressure sensor 43, the microcontroller 47 again activates the sounder 52 to give an audible warning of the failure of the apparatus 3 to monitor for a leak of the molten plastics material, and also activates a second relay 55, which may also be used to deactivate the injection moulding machine on which the mould 1 is mounted.

Additionally, one or both of the first and second relays 54 and 55 may be connected to respective lights or other visual warning systems in order to facilitate a visual determination of the reason for the activation of the sounder 52, in other words, whether the activation of the sounder 52 resulted from a leak of the molten plastics material being detected by either the first and second detecting circuits 28 and 37, or failure of the first and second detecting circuits 28 and 37 of the apparatus 3.

The compressed air source (not shown) may be provided by any suitable compressed air source, for example, a compressor, or from a cylinder of compressed air. In some embodiments of the invention the pressurised air source may be provided by an air pump.

In use, the first detecting circuit 28 is located in the galleries 25 of the mould 1 with the tubular detecting elements 30 located adjacent the respective joints between the secondary injection nozzles 12 and the gates 14, the secondary injection nozzles 12 and the hot runner manifold 9, and the cylindrical heater 11 and the hot runner manifold 9. The tubular detecting element 30 of the second detecting circuit 37 is located adjacent the joint between the main injection nozzle 7 and the sprue bush 10. The first and second detecting circuits 28 and 37 are connected to the control and monitoring circuit 38. The compressed air source (not shown) is connected to the isolating valve 41 of the control and monitoring circuit 38, and the relays 54 and 55 are connected to the control circuitry of the moulding machine, neither of which are shown. With the apparatus 3 so connected, the apparatus 3 is then ready for use.

The valve 41 is operated under the control of the microcontroller 47 from the isolating state into the open state, and the pressure regulator 42 is set to supply air to the first and second detecting circuits 28 and 37 at the desired predefined pressure of 0.1 bar. The first and second flow controllers 45 and 48 are set to provide the flow rate of air through the first and second detecting circuits 28 and 37 at suitable flow rates. With the compressed air source (not shown) continuously supplying air at the predefined pressure of 0.1 bar through the valve 41 to the first and second detecting circuits 28 and 37, the microcontroller 47 initially, before any leaks occur, monitors signals from the first, second and third pressure sensors 43, 44 and 49, and determines from the second and third pressure sensors 44 and 49 the value of the normal circuit pressures developed by the first and second detecting circuits 28 and 37, respectively, at the second and third pressure sensors 44 and 49, with no leaks of molten plastics material in the mould 1, or from the main injection nozzle 7. The values of the normal circuit pressures are then recorded and stored in the microcontroller 47.

The microcontroller 47 at periodic intervals of, for example, 5 seconds each, reads signals from the second and third pressure sensors 44 and 49 and determines the current circuit pressures at the second and third pressure sensors 44 and 49. The current circuit pressures are compared with the corresponding recorded values of the normal circuit pressures, and in the event of a current read circuit pressure from the second or third pressure sensors 44 or 49 exceeding the stored value of the corresponding normal circuit pressure, which would be indicative of detection of a leak of molten plastics material by the corresponding one of the first and second detecting circuits 28 and 37, the microcontroller 47 activates the sounder 52 to sound the alarm, and also activates the first relay 54.

In the event of the microcontroller 47 determining a pressure drop in the pressure from signals read from the first pressure sensor 43, which would be indicative of a fault in the supply of compressed air to the first and second detecting circuits 28 and 37, the microcontroller 47 activates the sounder 52 and the second relay 55.

While the compressed air source has been described as providing a continuous supply of air at the predefined pressure of 0.1 bar to the first and second detecting circuits 28 and 37 through the valve 41, it is envisaged that in order to conserve energy, the compressed air may be supplied intermittently to the first and second detecting circuits 28 and 37 through the valve 41, which would be operated intermittently to supply the compressed air to the two detecting circuits 28 and 37. In which case, it is envisaged that the isolating valve 41 would be operated periodically under the control of the microcontroller 47 from the isolating state to the open state, and would be maintained in the open state for a predefined time period. The isolating valve 41 would be operated from the isolating state to the open state at intervals of predefined time duration.

Each time the isolating valve 41 would be operated from the isolating state to the open state, once steady state conditions occurred in the first and second detecting circuits 28 and 37, the microcontroller 47 would read the signals from the first, second and third pressure sensors 43, 44 and 49 and determine firstly, if a pressure drop from the normal pressure of 0.1 bar had occurred at the first pressure sensor, and if so would activate the sounder 52 and the second relay 55, and secondly, would determine if the current circuit pressures read from the second and third pressure sensors 44 and 49 exceeded the stored values of the corresponding normal circuit pressures of the first and second detecting circuits 28 and 37, and if so, the microcontroller 47 would activate the sounder 52 and the first relay 54. Typically, it is envisaged that the predefined time duration of the intervals between the operations of the isolating valve 41 from the isolating state to the open state will be in the order of 15 seconds to 20 seconds, and the predefined time periods during which the isolating valve 41 will be maintained in the open state will be in the order of 2 seconds to 5 seconds. However, the predefined time duration and the predefined time period may be of any suitable values.

Referring now to Fig. 6 there is illustrated apparatus according to another embodiment of the invention indicated generally by the reference numeral 60, which is also configured for carrying out a method also according to the invention for detecting a leak of molten plastics material in the mould 1. The apparatus 60 is substantially similar to the apparatus 3 described with reference to Figs. 1 to 5, and similar components are identified by the same reference numerals. In this embodiment of the invention the second detecting circuit 37 is similar to the second detecting circuit 37 of the apparatus 3, and the control of the flow of air through the second detecting circuit 37 through the flow controller 48, and the monitoring of the circuit pressure by the third pressure sensor 49 in the second detecting circuit 37 is similar to that described with reference to the apparatus 3.

However, in this embodiment of the invention the flow control and monitoring of the circuit pressure in the first detecting circuit 28 is different to that described with reference to the apparatus 3 of Figs. 1 to 5. In this embodiment of the invention the flow control of the air through the first detecting circuit 28 is controlled by a flow controller 45, similar to the flow controller 45 described with reference to the apparatus 3 of Figs. 1 to 5, but with the exception that the flow controller 45 is located at the downstream end of the first detecting circuit 28 instead of at the upstream end of the first detecting circuit 28 as in the case of the apparatus 3 of Figs. 1 to 5. Additionally, the circuit pressure which is monitored by the second pressure sensor 44, instead of being monitored at the upstream end of the first detecting circuit 28, is monitored at the downstream end of the first detecting circuit 28 just upstream of the flow controller 45. The downstream end of the first detecting circuit 28 is connected to the control and monitoring circuit 38 by the downstream connecting conduit 32b.

In use, in this embodiment of the invention the operation of the apparatus in connection with monitoring the second detecting circuit 37 is similar to that described with reference to the monitoring of the second detecting circuit 37 described with reference to the apparatus 3 of Figs. 1 to 5. However, in this embodiment of the invention when the first detecting circuit 28 is installed in the mould 1, and is connected to the control and monitoring circuit 38, when the isolating valve 41 has been operated into the open state by the microcontroller 47 initially, before any leaks occur, once steady state conditions prevail in the first detecting circuit 28, the microcontroller 47 reads signals from the second pressure sensor 44 to determine the normal circuit pressure downstream of the first detecting circuit 28, when there are no leaks in the mould 1. The value of the normal circuit pressure read from the second pressure sensor 44 is recorded and stored in the microprocessor 47. Once the value of the normal circuit pressure of the first detecting circuit 28 has been stored, the microprocessor 47 periodically reads signals from the second pressure sensor 44, and compares the current circuit pressure with the stored value of the normal circuit pressure. In the event of the microcontroller 47 detecting the current circuit pressure read from the second pressure sensor 44 being below the stored value of the normal circuit pressure, which would be indicative of a reduction in flow of air through the first detecting circuit 28, as a result of deformation of one of the tubular detecting elements 30 thereof, resulting from a leak of molten plastics material into one of the galleries 25 of the mould 1, the microprocessor 47 activates the sounder 52 and the relay 54 as already described with reference to the apparatus 3 of Figs. 1 to 5.

Otherwise, the apparatus 60 and its operation is similar to that already described with reference to the apparatus 3 of Figs. 1 to 5.

An additional advantage of the apparatus 60 of Fig. 6 is that any break or discontinuity in the first detecting circuit 28, which would render the first detecting circuit ineffective in detecting leaks of molten plastics material, is readily detectable. This is as a result of the fact that the second pressure sensor 44 monitors the pressure at the downstream end of the first detecting circuit, and therefore, a break or a discontinuity in the first detecting circuit 28 of the apparatus 60 would result in a drop in the pressure read from the second pressure sensor 44, or the absence of a pressure reading from the second pressure sensor 44. On the microcontroller 47 detecting such a pressure drop, the microcontroller 47 would activate the sounder 52 and the first relay 54 as already described.

While in the embodiments of the invention described with reference to Figs. 1 to 6, the pressure read from the second and third pressure sensors 44 and 49 is gauge pressure, however, it is envisaged that instead of reading gauge pressure from the second and third pressure sensors 44 and 49, the second and third pressure sensors 44 and 49 could be configured to monitor differential pressure across the first and second flow controllers 45 and 48, respectively, which would give a signal proportional to the flow of air through the first and second detecting circuits 28 and 37, respectively.

While the apparatus 60 has been described as operating with the air being continuously supplied to the first and second detecting circuits 28 and 37 through the isolating valve 41, it will be readily apparent to those skilled in the art that instead of continuously supplying air to the first and second detecting circuits 28 and 37 of the apparatus 60, the isolating valve 41 may be controlled by the microcontroller 47 to intermittently supply air to the detecting circuits at intervals of predefined time duration, for example, 15 seconds to 20 seconds for predefined time periods of 2 seconds to 5 seconds, or any other predefined time duration values or predefined time period values.

While the fluid supplied to the detecting circuits has been described as comprising air, any other suitable fluid may be used, however, in general, it is envisaged that a gaseous fluid would be the preferred fluid rather than a liquid.

It will also be appreciated that while the tubular detecting elements have been described as being of heat stabilised silicone rubber material, the tubular detecting elements may be of any other suitable material which would be of deformable transverse cross-section, and preferably, would be resiliently deformable. However, it will be appreciated that any such material must be heat resistant to a temperature of at least the melting point of the plastics material. It will also be appreciated that the tubular detecting elements may be of any other bore diameter, and indeed, it is envisaged that in certain cases, the bore through the tubular detecting elements may be of cross-section other than circular. While the connecting conduits have been described as being of stainless steel, conduits of any other suitable material may be provided. It is also envisaged that while the connecting conduits have been described as being of a rigid material, while this is desirable it is not essential. Although, it would be desirable that the connecting conduits would be of a non-deformable material. Although, in some embodiments of the invention it is envisaged that the connecting conduits may be of a deformable material. It will also of course be appreciated that either or both of the entire detecting circuits may be of a material of deformable transverse cross-section which would facilitate monitoring for leaks along the entire length of the detecting circuit.

While the mould has been described as comprising an injection mould, it will be readily apparent to those skilled in the art that the apparatus and the method according to the invention may be used in conjunction with any type of plastics material forming mould. Needless to say, while the injection mould has been described as being a two-cavity mould, the mould may comprise any desired number of cavities, and needless to say, would comprise a corresponding number of second injection nozzles and gates. Indeed, in some embodiments of the invention it is envisaged that each cavity may comprise more than one gate and would thus be provided with corresponding number of secondary injection nozzles.

While the apparatus has been described as comprising a first detecting circuit whereby a plurality of the tubular detecting elements are provided in series, it is envisaged that in certain embodiments of the invention the detecting circuit may comprise a single tubular detecting element only. In other cases, it is envisaged that a plurality of detecting circuits would be provided each with one single tubular detecting element. In other cases, it is envisaged that a plurality of detecting circuits may be provided whereby each detecting circuit would be provided with more than one series connected tubular detecting elements, or where some of the detecting circuits would be provided with a single tubular detecting element and others of the detecting circuits would be provided with a plurality of the tubular detecting elements connected in series.

It will also be appreciated that while the apparatus and the detecting circuits have been described for use in monitoring for leaks of molten plastics material from an injection mould, the apparatus and detecting circuit may be used for monitoring for leaks of molten plastics material in any system whereby molten plastics material is provided under pressure, for example, in an extrusion system, adjacent an extrusion nozzle, a plastics melting and pressurisation system, for example, a plastics extrusion system, such as the component of a moulding machine or an extruder whereby plastics material is heated and pressurised to a molten state for delivering through an injection nozzle to a mould, or to an extrusion dye or the like.

## Claims

1. A method for detecting a leak of molten plastics material, the method comprising placing a tubular detecting element (30) adjacent a site from which molten plastics material may leak, and urging a fluid through the tubular detecting element (30), **characterised in that** the tubular detecting element (30) is of deformable transverse cross-section, and the method further comprises monitoring one of the pressure and flow of the fluid through the tubular detecting element (30) at a location one of upstream and downstream of the tubular detecting element (30), and determining the presence of a leak of molten plastics material adjacent the tubular detecting element (30) in response to the one of the monitored pressure and the monitored flow of the fluid through the tubular detecting element (30).

2. A method as claimed in Claim 1 **characterised in that** the tubular detecting element (30) comprises a bore (31) of circular transverse cross-section and of diameter lying in the range of 0.1mm to 10mm.

3. A method as claimed in Claim 1 or 2 **characterised in that** the flow of the fluid through the tubular detecting element (30) is flow controlled.

4. A method as claimed in Claim 3 **characterised in that** the flow of fluid through the tubular detecting element is controlled by a flow control means (45), and the flow rate of the fluid through the tubular detecting element is determined by the differential pressure across the flow control means.

5. A method as claimed in any preceding claim **characterised in that** the presence of leaking molten plastics material is determined in response to a fall in the flow rate of the fluid being urged through the tubular detecting element (30).

6. A method as claimed in any preceding claim **characterised in that** the fluid is applied to the tubular detecting element (30) at a regulated pressure.

7. A method as claimed in any preceding claim **characterised in that** the fluid is intermittently urged through the tubular detecting element (30) at intervals of predefined time duration for predefined time periods.

8. A method as claimed in any preceding claim **characterised in that** the fluid is delivered to the tubular detecting element (30) through a connecting conduit (28,32,37), the connecting conduit (32) comprises a non-deformable material.

9. A method as claimed in any preceding claim **characterised in that** a plurality of tubular detecting elements (30) are placed at a plurality of respective sites from which molten plastics material may leak, the tubular detecting elements (30) are connected in series by a plurality of respective ones of the connecting conduits (32), and the fluid is urged through the tubular detecting elements (30) in series.

10. A method as claimed in any preceding claim **characterised in that** the method is configured for detecting a leak of molten plastics material in a plastics material forming mould (1) one of outside the plastics material forming mould and within the plastics material forming mould, and the tubular detecting element (30) is located one of outside and within the mould (1).

11. A method as claimed in Claim 10 **characterised in that** the tubular detecting element (30) is located adjacent an injection nozzle (7) through which molten plastics material is delivered to a corresponding moulding cavity (5) in the mould (1).

12. A method as claimed in Claim 10 or 11 **characterised in that** the tubular detecting element (30) is located in one of a gallery (25) and a channel (15) in the mould (1) adjacent a site from which the molten plastics material may leak.

13. Apparatus for detecting a leak of molten plastics material, the apparatus (3) comprising a tubular detecting element (30) configured for placing adjacent a site from which molten plastics material may leak, and an urging means (38,40) for urging a fluid through the tubular detecting element (30), **characterised in that** the tubular detecting element (30) is of a deformable transverse cross-section, and the apparatus further comprises a monitoring means (38,47) for monitoring one of the pressure and flow of the fluid through the tubular detecting element (30) at one of an upstream location and a downstream location relative to the tubular detecting element (30), and a means (37) for determining the presence of a leak of molten plastics material adjacent the tubular detecting element (30) in response to the one of the monitored pressure and the monitored flow of the fluid monitored by the monitoring means (38,47).

14. Apparatus as claimed in Claim 13 **characterised in that** the tubular detecting element (30) comprises a heat resistant material.

15. A moulding machine comprising a plastics material forming mould (1), and apparatus (3) as claimed in Claim 13 or 14 for detecting a leak of molten plastics material in the mould (1).

## Patentansprüche

1. Verfahren zum Erkennen einer Leckage von geschmolzenem Kunststoffmaterial, wobei das Verfahren ein Anordnen eines rohrförmigen Erkennungselements (30) neben einer Stelle, aus der geschmolzenes Kunststoffmaterial austreten kann, und ein Drücken eines Fluids durch das rohrförmige Erkennungselement (30) umfasst, **dadurch gekennzeichnet, dass** das rohrförmige Erkennungselement (30) einen verformbaren Querschnitt aufweist, und wobei das Verfahren ferner ein Überwachen des Drucks oder des Flusses des Fluids durch das rohrförmige Erkennungselement (30) an einer Stelle vor oder nach dem rohrförmigen Erkennungselements (30) und ein Bestimmen des Vorhandenseins einer Leckage von geschmolzenem Kunststoffmaterial nahe dem rohrförmigen Erkennungselement (30) als Reaktion auf den überwachten Druck oder den überwachten Fluss des Fluids durch das rohrförmige Erkennungselement (30) umfasst.

2. Verfahren nach Anspruch 1, **dadurch gekennzeichnet, dass** das rohrförmige Erkennungselement (30) eine Bohrung (31) mit kreisförmigem Querschnitt und einem Durchmesser zwischen 0,1 mm und 10 mm aufweist.

3. Verfahren nach Anspruch 1 oder 2, **dadurch gekennzeichnet, dass** der Fluidfluss durch das rohrförmige Erkennungselement (30) flussgesteuert ist.

4. Verfahren nach Anspruch 3, **dadurch gekennzeichnet, dass** der Fluidfluss durch das rohrförmige Erkennungselement von einer Flusssteuereinrichtung (45) gesteuert wird und der Volumenstrom des Fluids durch das rohrförmige Erkennungselement durch den Differenzdruck über die Flusssteuereinrichtung bestimmt wird.

5. Verfahren nach einem der vorhergehenden Ansprüche, **dadurch gekennzeichnet, dass** das Vorhandensein einer Leckage von geschmolzenem Kunststoffmaterial als Reaktion auf ein Abfallen des Volumenstroms des durch das rohrförmige Erkennungselement (30) gedrückten Fluids bestimmt wird.

6. Verfahren nach einem der vorhergehenden Ansprüche, **dadurch gekennzeichnet, dass** das Fluid mit einem geregelten Druck auf das rohrförmige Erkennungselement (30) aufgebracht wird.

7. Verfahren nach einem der vorhergehenden Ansprüche, **dadurch gekennzeichnet, dass** das Fluid in Intervallen von vordefinierter Dauer für vordefinierte Zeiträume intermittierend durch das rohrförmige Erkennungselement (30) gedrückt wird.

8. Verfahren nach einem der vorhergehenden Ansprüche, **dadurch gekennzeichnet, dass** das Fluid dem rohrförmigen Erkennungselement (30) durch ein Verbindungsrohr (28, 32, 37) zugeführt wird, wobei das Verbindungsrohr (32) ein nicht verformbares Material aufweist.

9. Verfahren nach einem der vorhergehenden Ansprüche, **dadurch gekennzeichnet, dass** eine Vielzahl von rohrförmigen Erkennungselementen (30) an einer Vielzahl von jeweiligen Stellen angeordnet ist, an denen geschmolzenes Kunststoffmaterial austreten kann, wobei die rohrförmigen Erkennungselemente (30) durch eine Vielzahl von jeweiligen Verbindungsrohren (32) in Reihe geschaltet sind und wobei das Fluid durch die rohrförmigen Erkennungselemente (30) in Reihe gedrückt wird.

10. Verfahren nach einem der vorhergehenden Ansprüche, **dadurch gekennzeichnet, dass** das Verfahren konfiguriert ist zum Erkennen einer Leckage von geschmolzenem Kunststoffmaterial in einer Form (1) zum Formen von Kunststoffmaterial außerhalb der Form zum Formen von Kunststoffmaterial oder in der Form zum Formen von Kunststoffmaterial und dass das rohrförmige Erkennungselement (30) außerhalb oder in der Form (1) angeordnet ist.

11. Verfahren nach Anspruch 10, **dadurch gekennzeichnet, dass** das rohrförmige Erkennungselement (30) neben einer Einspritzdüse (7) angeordnet ist, durch die geschmolzenes Kunststoffmaterial in einen entsprechenden Formhohlraum (5) in der Form (1) eingebracht wird.

12. Verfahren nach Anspruch 10 oder 11, **dadurch gekennzeichnet, dass** das rohrförmige Erkennungselement (30) in einem Korridor (25) oder einem Kanal (15) in der Form (1) neben einer Stelle angeordnet ist, an der das geschmolzene Kunststoffmaterial austreten kann.

13. Vorrichtung zum Erkennen einer Leckage von geschmolzenem Kunststoffmaterial, wobei die Vorrichtung (3) ein rohrförmiges Erkennungselement (30) umfasst, das derart konfiguriert ist, dass es neben einer Stelle angeordnet werden kann, an der geschmolzenes Kunststoffmaterial austreten kann, und eine Drückeinrichtung (38, 40), mit der ein Fluid durch das rohrförmige Erkennungselement (30) gedrückt wird, **dadurch gekennzeichnet, dass** das rohrförmige Erkennungselement (30) einen verformbaren Querschnitt aufweist, wobei die Vorrichtung ferner umfasst eine Überwachungseinrichtung (38, 47) zum Überwachen des Drucks oder des Flusses des Fluids durch das rohrförmige Erkennungselement (30) vor oder nach dem rohrförmigen Erkennungselement (30) und eine Einrichtung (37) zum Bestimmen des Vorhandenseins einer Leckage von geschmolzenem Kunststoffmaterial neben dem rohrförmigen Erkennungselement (30) als Reaktion auf den von der Überwachungseinrichtung (38, 47) überwachten Druck oder den überwachten Fluss des Fluids.

14. Vorrichtung nach Anspruch 13, **dadurch gekennzeichnet, dass** das rohrförmige Erkennungselement (30) ein hitzebeständiges Material aufweist.

15. Formgebungsmaschine mit einer Form (1) zum Formen von Kunststoffmaterial und Vorrichtung (3) nach Anspruch 13 oder 14 zum Erkennen einer Leckage von geschmolzenem Kunststoffmaterial in der Form (1).

## Revendications

1. Un procédé de détection d'une fuite de matière plastique fondue, le procédé comprenant la mise en place d'un élément de détection tubulaire (30) de manière adjacente à un site à partir duquel la matière plastique fondue peut fuir, et la poussée d'un fluide à travers l'élément de détection tubulaire (30), **caractérisé en ce que** l'élément de détection tubulaire (30) a une section transversale déformable, et le procédé comprend en outre la surveillance de l'un parmi la pression et l'écoulement du fluide à travers l'élément de détection tubulaire (30) à un emplacement parmi l'amont et l'aval de l'élément de détection tubulaire (30), et la détermination de la présence d'une fuite de matériau plastique fondu adjacente à l'élément de détection tubulaire (30) en réponse à l'un parmi la pression surveillée et l'écoulement surveillé du fluide à travers l'élément de détection tubulaire (30).

2. Un procédé selon la revendication 1, **caractérisé en ce que** l'élément de détection tubulaire (30) comprend un trou (31) de section transversale circulaire et de diamètre se situant dans la gamme de 0,1 mm à 10 mm.

3. Un procédé selon la revendication 1 ou 2, **caractérisé en ce que** l'écoulement du fluide à travers l'élément de détection tubulaire (30) est un écoulement contrôlé.

4. Un procédé selon la revendication 3, **caractérisé en ce que** l'écoulement de fluide à travers l'élément de détection tubulaire est contrôlé par un moyen de contrôle d'écoulement (45), et le taux d'écoulement du fluide à travers l'élément de détection tubulaire est déterminé par la pression différentielle à travers le moyen de contrôle d'écoulement.

5. Un procédé selon l'une quelconque des revendications précédentes, **caractérisé en ce que** la présence d'une fuite de matière plastique fondue est déterminée en réponse à une chute du taux d'écoulement du fluide poussé à travers l'élément de détection tubulaire (30).

6. Un procédé selon l'une quelconque des revendications précédentes, **caractérisé en ce que** le fluide est appliqué à l'élément de détection tubulaire (30) à une pression régulée.

7. Un procédé selon l'une quelconque des revendications précédentes, **caractérisé en ce que** le fluide est poussé par intermittence à travers l'élément de détection tubulaire (30) à des intervalles de durée prédéfinie pendant des périodes de temps prédéfinies.

8. Un procédé selon l'une quelconque des revendications précédentes, **caractérisé en ce que** le fluide est délivré à l'élément de détection tubulaire (30) par l'intermédiaire d'un conduit de raccordement (28, 32, 37), le conduit de raccordement (32) comprenant un matériau indéformable.

9. Un procédé selon l'une quelconque des revendications précédentes, **caractérisé en ce qu'**une pluralité d'éléments de détection tubulaires (30) sont placés à une pluralité de sites respectifs d'où la matière plastique fondue peut fuir, les éléments de détection tubulaires (30) sont connectés en série par une pluralité de conduits de raccordement respectifs (32), et le fluide est poussé à travers les éléments de détection tubulaires (30) en série.

10. Un procédé selon l'une quelconque des revendications précédentes, **caractérisé en ce que** le procédé est configuré pour détecter une fuite de matière plastique fondue dans un moule de formage de matière plastique (1) parmi l'un de l'extérieur du moule de formage de matière plastique et l'intérieur du moule de formage de matière plastique, et l'élément de détection tubulaire (30) est situé parmi l'un de l'extérieur et l'intérieur du moule (1).

11. Un procédé selon la revendication 10, **caractérisé en ce que** l'élément de détection tubulaire (30) est situé de manière adjacente à une buse d'injection (7) à travers laquelle une matière plastique fondue est délivrée à une cavité de moulage correspondante (5) dans le moule (1).

12. Un procédé selon la revendication 10 ou 11, **caractérisé en ce que** l'élément de détection tubulaire (30) est situé parmi l'un d'une galerie (25) et d'un canal (15) dans le moule (1) adjacent à un site à partir duquel la matière plastique fondue peut fuir.

13. Un appareil pour détecter une fuite de matière plastique fondue, l'appareil (3) comprenant un élément de détection tubulaire (30) configuré pour être placé de manière adjacente à un site à partir duquel une matière plastique fondue peut fuir, et un moyen de pousser (38, 40) pour pousser un fluide à travers l'élément de détection tubulaire (30), **caractérisé en ce que** l'élément de détection tubulaire (30) a une section transversale déformable, et l'appareil comprend en outre un moyen de surveillance (38,47) pour surveiller l'un parmi la pression et l'écoulement du fluide à travers l'élément de détection tubulaire (30) à l'un parmi un emplacement en amont et un emplacement en aval par rapport à l'élément de détection tubulaire (30), et un moyen (37) pour déterminer la présence d'une fuite de matériau plastique fondu adjacente à l'élément de détection tubulaire (30) en réponse à l'un de la pression surveillée et de l'écoulement surveillé du fluide surveillé par le moyen de surveillance (38, 47).

14. Appareil selon la revendication 13, **caractérisé en ce que** l'élément de détection tubulaire (30) comprend un matériau résistant à la chaleur.

15. Une machine de moulage comprenant un moule de formage de matière plastique (1), et un appareil (3) selon la revendication 13 ou 14 pour détecter une fuite de matière plastique fondue dans le moule (1).
